# EUROPEAN PATENT APPLICATION

(11) **EP 1 810 953 A1**
(43) Date of publication of application: **25.07.2007**
(21) Application number: 06425017.8
(22) Date of filing: 17.01.2006
(51) Int. Cl.: C02F 11/14, C02F 11/16

(54) **A method and a plant for treating waste material from olive oil production**

(71) Applicant: Unieco Societa' Cooperativa, 42100 Reggio Emilia RE (IT)
(72) Inventor: Nicolosi, Vincenzo Marco, 95030 Gravina di Catania (CT) (IT)
(74) Representative: Spera, Maria Caterina

(57) **Abstract**

The method for treating the rejects of olive oil production comprises the pressing processing of the olives with the two-step procedures and presents, after the separation of the processed olive residues-vegetable water from oil, the processed olive residues-vegetable water is mixed with caustic lime, CaO, in the percentage comprised between 1 and 10% by weight on the processed olive residues-vegetable water. The plant for the application of the method for treating the processed olive residues-vegetable water comprises at least one means for storing the caustic lime, at least one means for feeding the caustic lime and at least one mixing means. This plant, advantageously for the application on a large scale production, has at least one process computer, or PLC, connected to measuring and feeding apparatuses, as well as suitable to realise a management of the process with semiautomatic or completely automatic control within the operation parameters predetermined and stored therein.

## Description

The invention relates to a method for treating olive oil rejects, i.e. a method for treating the by-product of olive processing, residue of processed olives, eliminating the vegetable water, making it thus easy to be handled, transported and reused as well as harmless for the environment; in the invention also suitable plant embodiments to carry out the above method are provided.

The processing cycle known in the oil industry can be thus summarised:
- defoliation;
- washing of the olives;
- milling and preparation of the paste;
- extraction, from the paste through centrifugation or pressure, of a must made of oil and water;
- centrifugation of the must and separation of the oil from the residual liquid.

The residual liquid at the end of the process constitutes the vegetable water made of the water present in the fruit, of the water possibly added during the processing step, as well as of the organic and inorganic substances being soluble therein.

The vegetable water shows itself as a green-brown, highly polluting liquid with acid reaction. Currently, the most diffused procedure consists in the temporary collection of the vegetable water in containment tanks waiting for their final disposal.

In particular, the production procedure provides the following steps: a first one of washing the olives, carried out simultaneously with their defoliation; this operation is obtained "dry-wise" by means of suction fan followed by separator or "wet-wise" using water; the washing water is continuously recycled and renewed at periodical intervals; a second one of crushing, which can be carried out in the plants of greatest capacity in two successive stages by means of hammer mills and thus with wheel millstones, while in the units of reduced production only millstones are used.

The paste pressing occurs by using traditional hydraulic presses, to obtain must wherefrom oil will be extracted in a successive step and processed olive residues. This must is then subjected to fast centrifugation which separates the oil from the vegetable waters present in the must obtaining, at the end of the cycle, two by-products, processed olive residues and vegetable water. More modern plants use three-phase centrifuges which need the addition of water for their operation, so as to directly extract oil from the paste (eliminating the traditional pressing step) and thus obtaining, as by-products, processed olive residues and vegetable water (in a greater amount with respect to the traditional process due to the addition of water carried out in the process).

The disposal of these by-products exhibits remarkable drawbacks due to their nature and concentration in a brief period of the year, in fact oil campaigns last 3-4 months, in general from November till February.

The purification of the vegetable water with the known technologies involves costs of first plant and operation which result to be notable in comparison with the cost on the amount of oil produced, moreover they cannot, in general, be located at the same oil-mills, which generates the need of the transportation from the oil-mill to the suitable plant.

The displacement to the purification plants is not well accepted by the managers since waters do not easily participate in the biological purification process.

The presence of very active organic substances in the vegetable water and in the aqueous component of the processed olive residues make the disposal in the dump not easy and the reuse in agriculture difficult, due to the high content of polyphenols which, in the long run, bring about damages to the expansive soils.

Although the strew on agricultural soils is not forbidden by the current law, within provided strew ratios, this solution remains however unfeasible due to the scarcity of the soils available and to the need of carrying out this strew according to processing shifts suitable not to bring about damages to the soils themselves in the long run.

This state of the art can be subjected to remarkable improvements concerning the possibility of realising a method for processing the rejects of the olive pressing which allows to make them easy to be handled, transported, stocked and possibly reused, as well as harmless for the environment.

From what precedes the need derives of solving the technical problem of realising a method for processing the rejects of olive pressing which allows to recycle them, make them suitable to be used or handled, facilitating their successive use and disposal. A further aim of the present invention is the definition of a plant being suitable to make this method apt to be industrially applied by means of a suitable plant both for high production oil-mills and small oil-mills.

The invention solves the above technical problem by adopting a method for treating the rejects of the olive oil production, comprising: the pressing processing of the olives with the two-step procedure; characterised in that, further to the separation of the processed olive residues-vegetable water, the processed olive residues-vegetable water is mixed with caustic lime, CaO, in the percentage comprised between 1 and 10% by weight on the processed olive residues-vegetable water.

By adopting, in a preferred embodiment, a second step of completion of the exothermic reaction between the caustic lime and the vegetable water contained in the processed olive residues which advantageously occurs by prosecuting the mixing.

By adopting, moreover, in a preferred embodiment, a third step of maturation of the processed olive residues treated in a sufficiently aerated place to favour the desiccation.

By adopting, in a further and preferred embodiment, the percentage of caustic lime comprised between 3 and 5% by weight of the processed olive residues-vegetable water, in the case of olives being already mature.

By adopting, even more, in a further and preferred embodiment, the percentage of caustic lime comprised between 6 and 8% by weight of the processed olive residues-vegetable water in the case of olives being mainly non completely mature.

By adopting, moreover, a plant for the application of the method for treating the processed olive residues-vegetable water comprising at least one means for stocking the caustic lime, at least one means for feeding the caustic lime and at least one mixing means.

By adopting, even more, a plant for the application of the method for treating the processed olive residues-vegetable water comprising apparatuses for measuring the amounts of processed olive residues-vegetable water to be treated.

By adopting, moreover, a plant for the application of the method for treating the processed olive residues-vegetable water wherein said measuring apparatuses are automatic apparatuses for measuring the mass and/or the humidity.

By adopting, even more, a plant for the application of the method for treating the processed olive residues-vegetable water comprising the subjection of the powder caustic lime feed regulation with electronic control.

By adopting, moreover, a plant for the application of the method for treating the processed olive residues-vegetable water comprising a process computer, or PLC, connected to said measuring and feeding apparatuses, as well as suitable to realise a management of the process with semi-automatic control, within operation parameters being predetermined and stored therein.

By adopting, finally, in a preferred embodiment, a plant for the application of the method for treating the processed olive residues-vegetable water comprising a process computer, or PLC, connected to said measuring and feeding apparatuses, as well as suitable to realise a management of the process with completely automatic control within operation parameters being predetermined and stored therein.

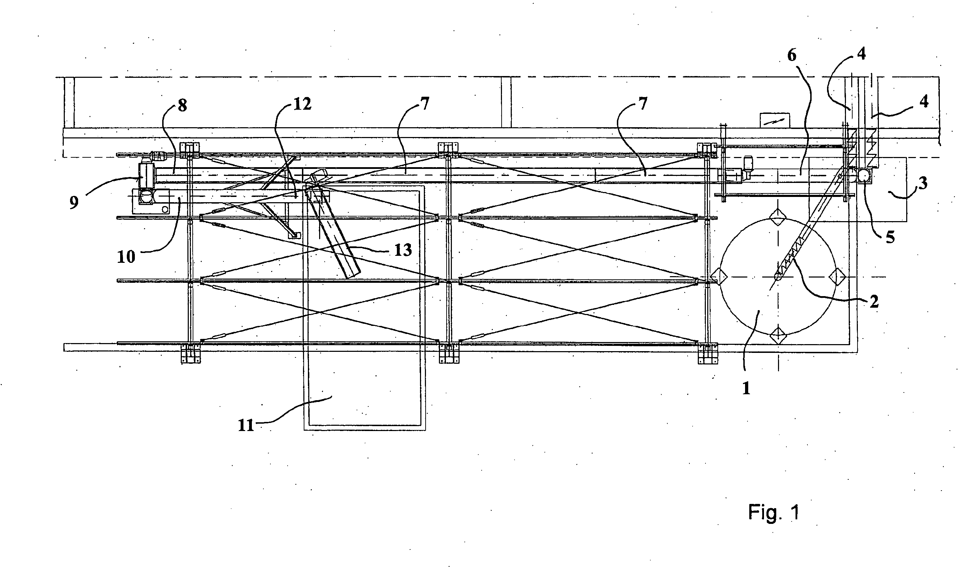

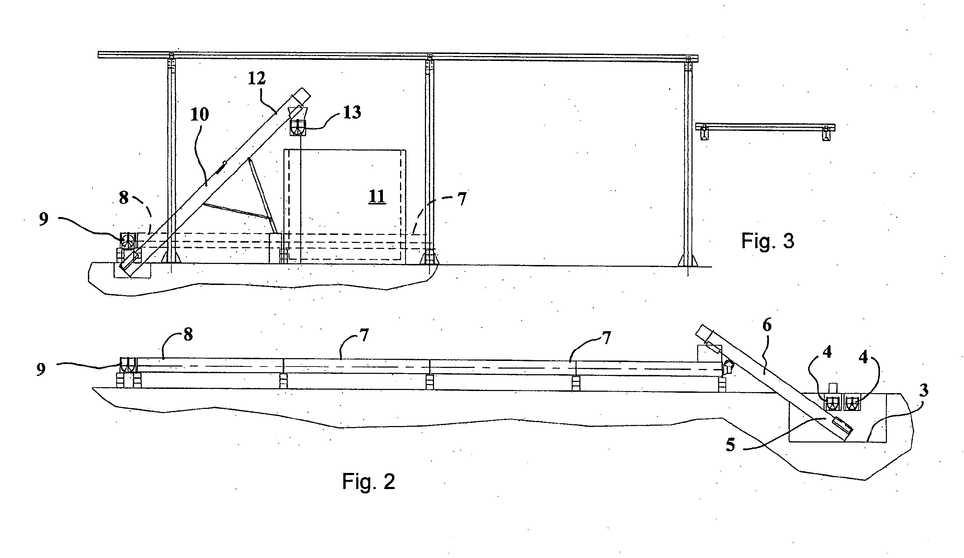

A mode to carry out the method provided by the invention is shown, by way of example, in the two drawing tables annexed wherein Figure 1 is a plan schematic view of the plant for treating the processed olive residues produced in the olive pressing; Figure 2 is a side view of the first mixing section of the processed olive residues and the caustic lime mixed therein; Figure 3 is the side view of a second section with the arrangement of the processed olive residues in the body for transportation.

The figures show the storage bin 1 and the metering screw 2 of the caustic lime in the sump pit 3 of the aqueous processed olive residues coming from the known olive pressing plants, by means of the floor horizontal augers 4. The caustic lime is added to the aqueous processed olive residues of the first section 5 of the first inclined mixing auger 6; a second horizontal auger 7 receives the mixed processed olive residues from said first auger 6 and it transports it to the opposite end 8, where a short auger 9 transfers the mixed processed olive residues to a fourth auger 10 which lifts it above the storage body 11 of the treated olive residues. At the upper end 12 the fourth auger pours the treated olive residues into a further fifth auger 13, swivelled above said storage body 11.

The method is applied to the by-products coming from the production cycle of the oil processed in two steps. The mixture processed olive residues-vegetable water is added with caustic lime, CaO, in the variable percentage, on the basis of the characteristics of the processed olive residues, from 1 to 10% by weight of the mixture. The percentage depends on the humidity of the mixture and it varies in the various moments of the olive pressing; with green olives, i.e. at the beginning of the pressing campaign, the percentage is high due to the big amount of vegetable water contained in the processed olive residues. It is known that the yield of green olives is quite low and that the processed olive residues produced thus contains more water; the percentage used in the tests carried out has resulted to be of 6-8%. On the contrary, at the end of the pressing campaign, i.e. with more mature olives, the addition of lime is reduced due to the smaller presence of vegetable water contained; in fact, it is known that more mature olives allow a greater oil yield producing a smaller amount of vegetable water; the percentage used in the tests carried out has resulted to be of 3-5%.

The by-products are always processed olive residues and vegetable water in both cases the oil-mill carries out a process of the traditional type (discontinuous) or of the modern one(continuous).

In the case of oil-mills producing with the continuous-cycle method the modification of the already existing centrifuge, consisting in transforming it from three-phase centrifuge into two-phase centrifuge, allows to obtain the required mixture of processed olive residues-vegetable water. In case of discontinuous-cycle oil-mill, instead, a mixer placed upstream of the above described process is enough.

By mixing the two by-products, processed olive residues and vegetable water, a single by-product is obtained which, before being sent to the storage, undergoes the treatment, carried out in the same oil-mill, consisting in the mixing with an additive of calcium oxide CaO, caustic lime, in order to reduce the amount of water, making it easier to be mixed and without risks of eluate release.

The calcium oxide (CaO), better known as caustic lime, once mixed with an additive reacts quickly with the water present in the mass, with an exothermic reaction transforming itself into calcium hydroxide (slaked lime), according to the following chemical reaction:

CaO + H₂O = Ca(OH)₂ + 15,5 kcal

the heat generated by hydration will continue in the mass storage container making the residual water evaporate until the by-product is brought to 50-60% by dry substance, without risks of release of the vegetable water contained therein.

From tests carried out it has been proved that for obtaining such a dry by-product it is to be mixed with additive from 1 to 10% by weight with calcium oxide (CaO).

The experimentation has been carried out in a plant as shown wherein the caustic lime, contained in the storage bin 1, is fed with the a metering screw 2 into the sump pit 3, where the aqueous processed olive residues is poured by the transport plant of the oil-mill (4). Therefore, the processed olive residues-vegetable water and the lime are poured into the first section 5 of the first inclined auger 6. In this auger there occurs a first mixing of the lime in the aqueous processed olive residues. At the end of the auger 6, the mixed mass falls into the second horizontal auger 7, which transports it next to the base of the storage body 11. The exothermic reaction between the caustic lime and the water already starts in the first auger, then it goes on for the whole successive path, also due to the quickness of the transport which requires several minutes for the complete transfer of the treated olive residues in the storage body 11.

Said exothermic reaction also occurs in the successive augers and it goes on in the body itself with the maturation also for several days.

The by-products of the oil production cycle thus treated are granular due to the agglomeration occurred, thanks to the caustic lime and also due to the presence of whole or squeezed kernels on the basis of the type of pressing adopted in the oil-mill.

The maturation of the processed olive residues thus treated goes on for several days with a progressive draining thereof if duly aerated. The lack of aeration leads to the formation of molds. The treated, well dried, olive residues however exhibits interesting qualities of use. In fact, it can be easily mixed, it can be thrown into the plants of waste composting, it exhibits an interesting calorific value for the combustion. After eight days from the treatment the processed olive residues has a lower calorific value of 4700 kcal/kg with a further capacity of maturation, i.e. of further desiccation, so as to significantly increase said calorific value.

For the use in incinerators of biomasses, i.e. those used in the combustion of waste, the granular olive residues thus treated exhibits, very advantageously, an acidity factor with pH = 12, i.e. highly basic.

The advantages obtained by the present invention are:
- the by-products of the olive oil production are treated in a simple way and, in consequence of this, they do not produce any unpleasant odour, resulting to be easily disposed and reused;
- the vegetable waters are absorbed by the lime in the slaking and evaporated due to the exothermic reaction, thus avoiding the pollution problems attributed thereto;
- in the case of continuous-cycle pressing plants the present method allows to zero the consume of the water currently necessary for the operation of three-phase centrifuges;
- moreover, always in the three-phase cycle, it allows not to add the 30C° warm water which is currently necessary for the operation of three-phase centrifuges, allowing the cold production, which allows to obtain higher quality oil;
- the by-product obtained with this procedure, granular olive residues thus treated, can be used as source of alternative energy, allowing the use of what, otherwise, would be highly polluting rejects being difficult and expensive to be managed.

In fact, with the treatment procedure described, the by-product thus obtained can be thrown into composting plants, where they exist, or easily introduced into their cycle or even disposed as fuel in the incinerators of biomasses, allowing the recycle of energies which would be otherwise non reused.

In the real actuation the percentages indicated by the method, as well as the mixing modes and the steps, the materials, the dimensions, the plant components and the executive details will be possibly different from those indicated, but technically equivalent thereto, without for this reason departing from the juridical domain of the present invention.

## Claims

1. Method for treating olive oil rejects, comprising: the pressing processing of the olives with the two-step procedure, i.e. **characterised in that**, after the separation of the processed olive residues-vegetable water from oil, the processed olive residues-vegetable water is mixed with caustic lime, CaO, in a percentage comprised between 1 and 10% by weight on the processed olive residues-vegetable water.

2. Treating method according to the preceding claim 1, **characterised in that** it provides a second step of completion of the exothermic reaction between the caustic lime and the vegetable water contained in the processed olive residues, which advantageously occurs with the mixing prosecution.

3. Treating method according to the preceding claim 2, **characterised in that** it provides a third step of maturation of the processed olive residues treated in a sufficiently aerated place to favour the desiccation.

4. Treating method according to one of the preceding claims, **characterised in that** the percentage of caustic lime is comprised between 3 and 5% by weight on the processed olive residues-vegetable water, in case of already mature olives.

5. Treating method according to one of the preceding claims, **characterised in that** the percentage of caustic lime is comprised between 6 and 8% by weight on the processed olive residues-vegetable water, in case of olives being mainly non completely mature.

6. Plant for the application of the method for treating the processed olive residues-vegetable water comprising at least one storage means (1) of the caustic lime, at least one feeding means (2) of the caustic lime and at least one mixing means (6).

7. Plant for the application of the treating method according to the preceding claim 6, **characterised in that** it has apparatuses for measuring the amount of processed olive residues-vegetable water to be treated.

8. Plant for the application of the treating method according to the preceding claim 7, **characterised in that** said measuring apparatuses are automatic apparatuses for measuring the mass and/or the humidity.

9. Plant for the application of the treating method according to the preceding claim 6, **characterised in that** it exhibits the subjection, with electronic control, of the powder caustic lime feed regulation.

10. Plant for the application of the treating method according to the preceding claim 7, **characterised in that** it has at least one process computer, or PLC, connected to said measuring and feeding apparatuses, as well as suitable to realise a management of the process with semi-automatic control, within the operation parameters predetermined and stored therein.

11. Plant for the application of the treating method according to the preceding claim 7, **characterised in that** it has at least one process computer, or PLC, connected to said measuring and feeding apparatuses, as well as suitable to realise a management of the process with completely automatic control, within the operation parameters predetermined and stored therein.
